# EUROPÄISCHE PATENTSCHRIFT

(11) **EP 1 132 240 B1**
(45) Veröffentlichungstag und Bekanntmachung des Hinweises auf die Patenterteilung: **03.01.2007**
(21) Anmeldenummer: 01105571.2
(22) Anmeldetag: 06.03.2001
(51) Int. Cl.: B60J 7/02

(54) **Öffnungsfähiges Fahrzeugdach mit einer Wasserableitanordnung**
Open vehicle roof construction provided with a water deflector device
Toit ouvrant pour vehicule equippé avec un dispositif deflecteur d'eau

(30) Priorität: 06.03.2000 DE 10010346
(43) Veröffentlichungstag der Anmeldung: 12.09.2001
(73) Patentinhaber: Webasto Vehicle Systems International GmbH, 82131 Stockdorf (DE)
(72) Erfinder: Seifert, Wolfgang, 82110 Germering (DE)
(74) Vertreter: Konnerth, Dieter Hans

(56) Entgegenhaltungen:
- EP-A- 0 396 006
- PATENT ABSTRACTS OF JAPAN vol. 008, no. 120 (M-300), 6. Juni 1984 (1984-06-06) & JP 59 026324 A (DAIKIYOO BEBASUTO KK), 10. Februar 1984 (1984-02-10)

## Beschreibung

Die vorliegende Erfindung betrifft ein öffnungsfähiges Fahrzeugdach mit einem zumindest einen Deckel aufnehmenden Rahmen, einer in diesem Rahmen angeordneten, nach oben offenen Wassersammelrinne und zumindest einem mit der Wassersammelrinne in Verbindung stehenden Wasserablaufkanal.

Ein derartiges öffnungsfähiges Fahrzeugdach ist aus der EP 0 396 006 B1 bekannt geworden. Ein Wasserablaufkanal, der mit einer Wassersammelrinne in Verbindung steht, um aus dieser Wasser abzuleiten, ist bei diesem bekannten Fahrzeugdach in Gestalt einer Rinne gebildet, welche den Tragrahmen für den Deckel des Fahrzeugdachs durchsetzt. Dieser Wasserablaufkanal mündet in die sich an den Tragrahmen anschließende feste Dachhaut. Nachteilig an dieser Wassersammel- und Ableitanordnung ist, daß der Boden der Wassersammelrinne entsprechend hoch liegend ausgebildet werden muß, d. h. ein zumindest gleich hohes Niveau aufweisen muß wie die umgebende feste Dachhaut. Damit ist diese bekannte Wassersammel- und Ableitanordnung auf eine entsprechende Dachkonstruktion beschränkt.

Im übrigen gehört zum Stand der Technik, das Wasser aus der Wassersammelschiene mittels Ablaufschläuchen in die A- und die C-Säulen der Karosserie auszuleiten. Diese Maßnahme ist mit entsprechenden Materialkosten und zusätzlicher Montagezeit verbunden.

Der vorliegenden Erfindung liegt die Aufgabe zugrunde, ein Fahrzeugdach der eingangs genannten Art zu schaffen, das eine einfach aufgebaute Anordnung zum Ableiten von Wasser aus dem Deckeltragrahmenbereich besitzt.

Diese Aufgabe wird durch ein Fahrzeugdach mit den Merkmalen des Anspruchs 1 gelöst. Vorteilhaft Weiterbildungen der Erfindung sind in den Unteransprüchen angegeben.

Demnach nutzt die Erfindung den verdeckten Zwischenraum zwischen dem Windschutzscheibenkleberand und der sich anschließenden Karosseriestruktur, um das Wasser aus der Wassersammelrinne unter Nutzung der vorhandenen Dachkrümmung abzuleiten, wobei erfindungsgemäß zu diesem Zweck der Wasserablaufkanal in den Bereich des Querspriegels anschließend an den oberen Rand der Windschutzscheibe integriert ist. Dieselbe oder eine ähnliche Anordnung kann für die Heckscheibe vorgesehen sein, deren oberer Rand ebenfalls an einen Querspriegel angrenzt.

Vorzugsweise ist das Fahrzeugdach als in eine Fahrzeugkarosserie einsetzbares Modul ausgebildet, welches den Deckel-Tragrahmen und die an dessen Vorder- und Rückseite angrenzenden Querspriegel mit umfaßt. In diesem Fall kann der Querspriegel oder können die Querspriegel bei der Herstellung des Dachmoduls bequem mit dem bzw. den jeweiligen Wasserablaufkanälen ausgerüstet werden. Der vordere Querspriegel wird auch als Windlauf bezeichnet.

Der Wasserablaufkanal, der erfindungsgemäß als Durchbruch des Querspriegels gebildet ist, kann beispielsweise als Blechkonstruktion erstellt sein. Alternativ kann dieser Durchbruch in Gestalt eines in dem Querspriegel eingeschäumten Rohrstücks gebildet sein. Im Falle einer nach oben offenen Rinne ist der Wasserablaufkanal im Bereich seiner oberen Ränder bevorzugt gegenüber der sich nach oben anschließenden festen Dachhaut abgedichtet.

Nachfolgend wird die Erfindung anhand der Zeichnung beispielhaft näher erläutert. Es zeigt:
- Fig. 1: in einer Draufsicht in Teilansicht ein Fahrzeug mit einem Fahrzeugdach, das als vorgefertigtes Dachmodul gebildet ist;
- Fig. 2: in einer Draufsicht in teilweise aufgeschnittener und vergrößerter Darstellung einen linken vorderen Eckbereich des Fahrzeugdachs (in Fig. 1 als Ausschnitt II bezeichnet);
- Fig. 3: einen Schnitt entlang der Linie III-III in Fig. 2;
- Fig. 4: eine Ansicht entlang des Pfeils IV in Fig. 2; und
- Fig. 5: eine Schnittansicht entlang der Linie V-V in Fig. 3.

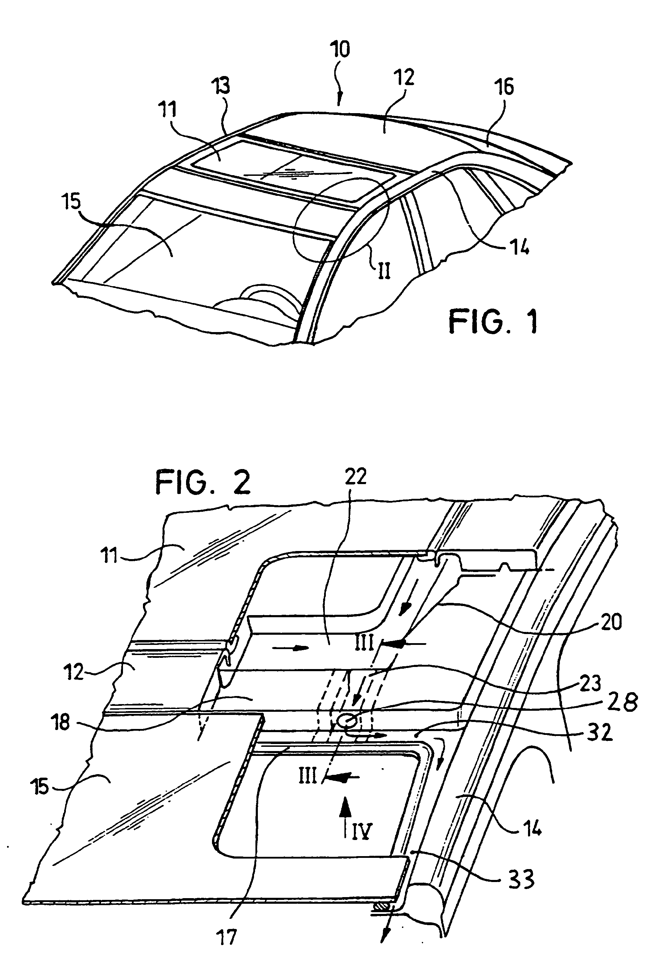

Das Fahrzeug-Dachmodul 10 enthält einen Deckel 11, der im in Fig. 1 gezeigten geschlossenen Zustand eine Dachausschnittöffnung verschließt, die in einer festen Fahrzeug-Dachhaut 12 gebildet ist, die sich vor und hinter dem Deckel 11 erstreckt. Das Dachmodul 10 erstreckt sich seitlich bis an Dachseitenholme 13 und 14, die einen festen Bestandteil der Fahrzeugkarosserie bilden. Die Fahrzeugkarosserie enthält einen großen Dachausschnitt, in dem das Dachmodul 10 als Einheit montiert ist. Am Vorderrand des Dachmoduls 10 schließt sich eine Windschutzscheibe 15 an und am Hinterrand des Dachmoduls 10 schließt sich eine Heckscheibe 16 an.

Die Windschutzscheibe 15 ist in eine Windschutzscheiben-Ausnehmung in der Karosserie eingesetzt und randseitig mittels einer Kleberaupe 17 mit einem die Ausnehmung umgebenden Rand 27 verklebt. In ähnlicher Weise ist die Heckscheibe 16 in eine Heckscheiben-Ausnehmung der Karosserie eingesetzt und dort mit der Karosserie verklebt. Bei der dargestellten Ausführungsform ist das Dachmodul 10 überwiegend aus Blech hergestellt, wobei der Deckel 11 bis auf seinen Rand aus durchscheinendem Kunststoffmaterial oder aus Glas besteht. Alternativ ist eine Ausführung des Dachmoduls überwiegend in Kunststoff möglich.

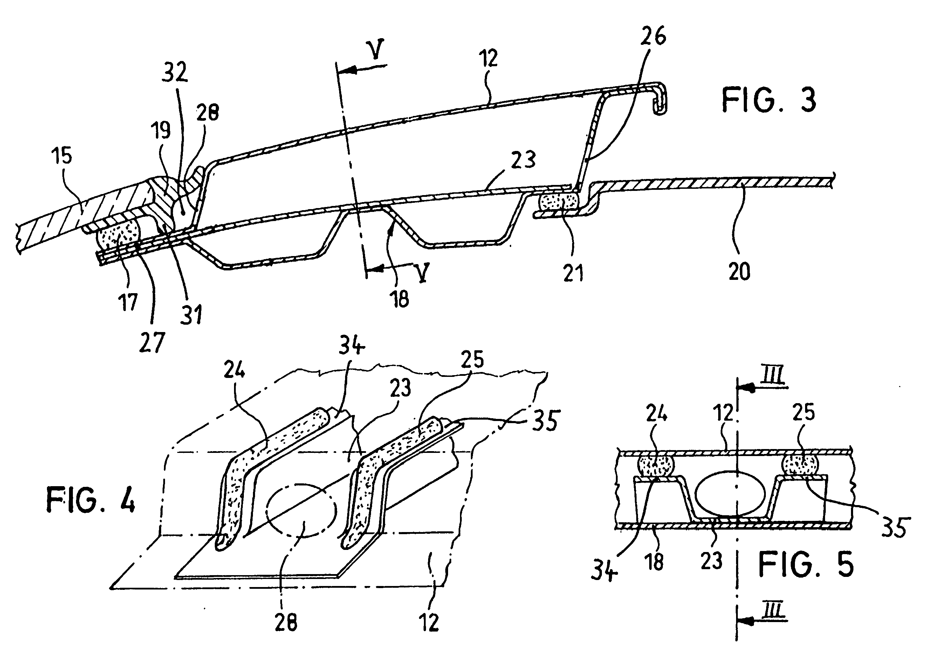

Die am Vorderende und am Hinterende des Dachmoduls 10 angeordneten Querspriegel sind bevorzugt als Blechteile ausgebildet. Der vordere Querspriegel 18, der unter der festen Dachhaut 12 angeordnet ist, erstreckt sich mit seinem Vorderrand bis zum Verbindungsbereich des Dachmoduls 10 mit der Windschutzscheibe 15. Als Dichtungsmittel zwischen dem oberen Rand der Windschutzscheibe 15 und dem Vorderrand der festen Dachhaut 12 (siehe Fig. 3) ist eine als Lippendichtung gebildete Dichtung 19 angeordnet, die aus elastomerem Material besteht und die Windschutzscheibe 15, mit deren oberem Rand sie fest verbunden ist, untergreift. Mit ihren zwei Lippen 30 und 31 liegt die Dichtung 19 am Vorderrand der Dachhaut 12 bzw. am Rand 27 der die Windschutzscheibe 15 umgebenden Fahrzeugkarosserie an.

Ein Rahmen 20 des Dachmoduls 10 ist in den Dachausschnitt des Dachmoduls eingesetzt und trägt den Deckel 11. Der Rahmen 20 ist an seiner Vorderseite (siehe Fig. 3) über eine Kleberaupe 21 mit dem rückwärtigen Ende des Querspriegels 18 verbunden. Der Rahmen 20 ist in etwa rechteckig und enthält eine innenliegende Wassersammelrinne 22 (siehe Fig. 2), die bevorzugt umlaufend gebildet ist. Zum Ableiten von Wasser, das sich in der Wassersammelrinne 22 angesammelt hat, ist ein Wasserablaufkanal 23 vorgesehen, der den vorderen Querspriegel 18 in Fahrzeuglängsrichtung durchsetzt und an seinem rückwärtigen Ende über eine Öffnung 26 in die Wassersammelrinne 22 und am Vorderende des Querspriegels 18 über eine Öffnung 28 in einen rinnenförmigen Zwischenraum 32 zwischen dem Vorderrand des Querspriegels 18 und der Kleberaupe 17 am Umfangsrand der Windschutzscheibe 15 mündet. Wie in Fig. 2 durch Pfeile dargestellt ist, fließt in der Wassersammelrinne 22 angesammeltes Wasser aufgrund der nach vorne geneigten Anordnung des Dachmoduls 10 in den Wasserablaufkanal 23 und entlang des rinnenförmigen Kanals bzw. Zwischenraums 32 und anschließend in einen seitlichen rinnenförmigen Zwischenraum 33 zwischen der Kleberaupe 17 und dem Seitenholm 14 bzw. der A-Säule ab. Im Bereich des Unterrands der Windschutzscheibe 15 ist dieser seitliche rinnenförmige Zwischenraum 33 mit einer Öffnung versehen, aus welcher das Wasser unterhalb der Windschutzscheibe 15 austritt.

Der Wasserablaufkanal 23 ist bevorzugt rinnenförmig mit z. B. U-förmigem Querschnitt gebildet (Fig. 5). Beidseits seiner oberen offenen Seite ist der rinnenförmige Wasserablaufkanal 23 an Dichtungsflanschen 34 und 35 mittels Kleberaupen 24 bzw. 25 gegenüber der festen Dachhaut 12 abgedichtet. Der rinnenförmige Wasserablaufkanal 23 ist somit seitlich von dem Dichtungsmaterial der Kleberaupen 24 und 25 umschlossen, mit dem er in einen entsprechenden Ausschnitt oder eine Einprägung des vorderen Querspriegels 18 eingebettet ist.

Der den vorderen Querspriegel 18 durchsetzende Wasserablaufkanal 23 kann nicht nur als getrenntes rinnenförmiges Element, sondern auch als integraler Bestandteil des vorderen Querspriegels 18 gebildet sein. Weiterhin kann der Wasserablaufkanal 23 statt in Rinnenform auch in Gestalt eines Rohrs gebildet sein.

Bevorzugt befindet sich integriert in den vorderen Querspriegel 18 beiderseits, d.h. im Bereich beider Seitenholme 13 und 14 der Fahrzeugkarosserie, jeweils ein Wasserablaufkanal 23.

Der Wasserablauf kann auch im Bereich der Heckscheibe 16 ausgebildet sein und in gleicher Weise den hinteren Querspriegel in Fahrzeuglängsrichtung durchsetzen.

### Bezugszeichenliste

- 10: Fahrzeug-Dachmodul
- 11: Deckel
- 12: Fahrzeug-Dachhaut
- 13: Dachseitenholm
- 14: Dachseitenholm
- 15: Windschutzscheibe
- 16: Heckscheibe
- 17: Kleberaupe
- 18: vorderer Querspriegel
- 19: Dichtung
- 20: Rahmen
- 21: Kleberaupe
- 22: Wassersammelrinne
- 23: Wasserablaufkanal
- 24: Kleberaupe
- 25: Kleberaupe
- 26: Öffnung
- 27: Rand
- 28: Öffnung
- 29:
- 30: Lippe
- 31: Lippe
- 32: Zwischenraum
- 33: seitlicher Zwischenraum

## Patentansprüche

1. Öffnungsfähiges Fahrzeugdach mit einem zumindest einen Deckel (11) aufnehmenden Rahmen (20), einer in diesem Rahmen (20) angeordneten, nach oben offenen Wassersammelrinne (22) und zumindest einem mit der Wassersammelrinne (22) in Verbindung stehenden Wasserablaufkanal (23),
**dadurch gekennzeichnet, daß** der Wasserablaufkanal (23) einen unter der festen Dachhaut 12 angeordneten Querspriegel (18) des in Richtung zu einer Windschutzscheibe (15) abfallenden Dachs zwischen der Wassersammelrinne (22) an der Rahmenvorderseite und dem oberen Rand der Windschutzscheibe (15) und/oder einen Querspriegel des in Richtung zur Heckscheibe (16) abfallenden Dachs zwischen der Wassersammelrinne (22) an der Rahmenrückseite und dem oberen Rand der Heckscheibe (16) durchsetzt.

2. Fahrzeugdach nach Anspruch 1,
**dadurch gekennzeichnet, daß** der Wasserablaufkanal (23) vor der randseitigen Verklebung (17) der Windschutzscheibe (15) bzw. der Heckscheibe (16) mit der Fahrzeugkarosserie in einen dort ausgebildeten kanalförmigen Zwischenraum (32) ausmündet.

3. Fahrzeugdach nach Anspruch 1 oder 2,
**dadurch gekennzeichnet, daß** der Wasserablaufkanal (23) in Form eines Rohrs gebildet ist.

4. Fahrzeugdach nach Anspruch 1 oder 2,
**dadurch gekennzeichnet, daß** der Wasserablaufkanal (23) in Form einer nach oben offenen Rinne gebildet ist.

5. Fahrzeugdach nach Anspruch 4,
**dadurch gekennzeichnet, daß** der rinnenförmige Wasserablaufkanal (23) nach oben zur festen Dachhaut (12) abgedichtet ist.

6. Fahrzeugdach nach einem der Ansprüche 1 bis 5,
**dadurch gekennzeichnet, daß** es als in eine Fahrzeugkarosserie einsetzbares Dachmodul (10) gebildet ist, welches den Rahmen (20) und die an dessen Vorder- und Rückseite angrenzenden Querspriegel (18) umfaßt.

## Claims

1. Openable vehicle roof having a frame (20) accommodating at least one panel (11), a water collecting channel (22) that is arranged in this frame (20) and is open at the top, and at least one water drainage channel connected to the water collecting channel (22),
**characterized in that** the water drainage channel (23) passes through a transverse support (18) arranged under the fixed roof skin (12) and belonging to the roof falling in the direction of a windscreen (15), between the water collecting channel (22) on the front side of the frame and the upper edge of the windscreen (15), and/or a transverse support of the roof falling in the direction of the rear window (16) between the water collecting channel (22) on the rear side of the frame and the upper edge of the rear window (16).

2. Vehicle roof according to Claim 1, **characterized in that** the water drainage channel (23) opens in front of the edge adhesive bond (17) of the windscreen (15) or of the rear window (16) to the vehicle body, into a channel-like interspace (32) formed there.

3. Vehicle roof according to Claim 1 or 2, **characterized in that** the water drainage channel (23) is shaped in the form of a tube.

4. Vehicle roof according to Claim 1 or 2, **characterized in that** the water drainage channel (23) is shaped in the form of a channel open at the top.

5. Vehicle roof according to Claim 4, **characterized in that** the channel-like water drainage channel (23) is sealed off at the top in relation to the fixed vehicle skin (12).

6. Vehicle roof according to one of Claims 1 to 5, **characterized in that** it is formed as a roof module (10) which can be inserted into a vehicle body and which comprises the frame (20) and the transverse support (18) adjoining its front and rear sides.

## Revendications

1. Toit ouvrant de véhicule, avec au moins un cadre (20) recevant au moins un panneau (11), une gouttière (22) collectrice d'eau ouverte vers le haut, disposée dans ce cadre (20), et au moins un canal (23) d'évacuation d'eau communiquant avec la gouttière (22) collectrice d'eau,
**caractérisé en ce que** le canal (23) d'évacuation d'eau traverse un arceau transversal (18), disposé en dessous de la couverture de toit fixe (12), du toit à pente descendante en direction d'un pare-brise (15) entre la gouttière (22) collectrice d'eau sur le côté avant du cadre et le bord supérieur du pare-brise (15), et/ou un arceau transversal du toit à pente descendante en direction de la lunette arrière (16) entre la gouttière (22) collectrice d'eau sur le côté arrière du cadre et le bord supérieur de la lunette arrière (16).

2. Toit de véhicule selon la revendication 1, **caractérisé en ce que** le canal (23) d'évacuation d'eau débouche, avant la liaison collée périphérique (17) du pare-brise (15) ou respectivement de la lunette arrière (16) avec la carrosserie du véhicule, dans un espace intermédiaire (32) en forme de canal qui y est formé.

3. Toit de véhicule selon la revendication 1 ou 2, **caractérisé en ce que** le canal (23) d'évacuation d'eau est réalisé sous la forme d'un tube.

4. Toit de véhicule selon la revendication 1 ou 2, **caractérisé en ce que** le canal (23) d'évacuation d'eau est réalisé sous la forme d'une gouttière ouverte vers le haut.

5. Toit de véhicule selon la revendication 4, **caractérisé en ce que** le canal (23) d'évacuation d'eau en forme de gouttière est étanché vers le haut par rapport à la couverture de toit fixe (12).

6. Toit de véhicule selon l'une des revendications 1 à 5, **caractérisé en ce qu'**il est réalisé sous la forme d'un module de toit (10) qui peut être installé dans une carrosserie de véhicule et qui comprend le cadre (20) et les arceaux transversaux (18) limitrophes du côté avant et du côté arrière de ce dernier.
